# EUROPEAN PATENT SPECIFICATION

(11) **EP 1 022 221 B1**
(45) Date of publication and mention of the grant of the patent: **05.11.2003**
(21) Application number: 00200085.9
(22) Date of filing: 11.01.2000
(51) Int. Cl.: B65B 39/00

(54) **Device for distributing set volumes of materials in powder form**
Vorrichtung zum Abgeben von vorbestimmten Volumina pulverförmigen Materials
Dispositif pour distribuer des volumes prédéterminés d'un matériau poudreux

(30) Priority: 22.01.1999 IT FI990012
(43) Date of publication of application: 26.07.2000
(73) Proprietor: Lardieri, Salvatore, 55010 Spianate-Altopascio (LU) (IT)
(72) Inventor: Lardieri, Salvatore, 55010 Spianate-Altopascio (LU) (IT)
(74) Representative: Fiammenghi-Domenighetti, Delfina

(56) References cited:
- EP-A- 0 490 607
- FR-A- 1 306 490
- FR-A- 1 486 726
- FR-A- 1 509 766

## Description

The present invention relates to a device for distributing set volumes of materials in powder form. More specifically, the invention relates to a device for intercepting a stream of material in powder form, which device is suitable in particular but not exclusively for use as a volumetric dosing device and can be employed in the chemical, pharmaceutical and food sectors, as well as in similar fields.

Many operations in the above sectors are carried out in conditions designed to exclude the risk of any contamination of the materials under treatment. This means that all the handling and conveying operations involving these materials are also conducted under the same conditions.

For example, in the pharmaceutical industry, the raw materials used, together with the intermediates and the products obtained, are often in powder form having smaller or larger particle sizes. These materials, which are generally stored in silos, are packaged in drums or similar containers before they are dispatched for their subsequent applications. The capacity of these drums or containers varies within wide limits but is normally of the order of a few tens of dm³.

The packaging of course involves a dosing operation, which enables one to insert into each container the amount of material needed to fill it. The problem presented by such an operation concerns not so much the accuracy of the measurement (which is obviously far from the accuracy required e.g. when dosing individual components in the preparation of the pharmaceutical) as the need to prevent as far as possible any contamination or pollution of the material, which must be kept under the sterile conditions required for its subsequent applications.

The devices that are currently used for dosing materials in powder form under the specific use conditions described above have been found unsatisfactory for various reasons. Thus, the use of simple scales, which requires the constant presence of at least one operative to carry out manual checks and adjustments, presents the problem of keeping the material in question under sterile conditions. This is because, even though all the possible hygienic measures are adopted to protect the material from its surroundings and objects with which it comes into contact, there is still a high risk of contamination of the material caused by this human intervention.

The use of complex devices with load chambers does not solve this problem. Moreover, the large capital investment and the high cost of maintenance of these devices do not seem to be justified, because the precision they are able to ensure is not, as has been said, generally required in this specific case.

Automatically operating volumetric dosing devices with an endless screw do not require the direct handling of the material by plant operatives and they efficiently prevent its contamination. However, they have the considerable disadvantage of having to be periodically cleaned in order to ensure their proper operation, and this is a very difficult and laborious task. Furthermore, they take up a great deal of space, which generally causes logistic problems that are not easily solved.

Document FR-A-1 306 490 discloses a distributing value as defined in the preamble of claim 1.

The main object of the present invention is to provide a device for handling materials in powder form that efficiently ensures sterile conditions for the material under treatment, while having a simple structure and being easy to maintain.

Another object of the present invention is to provide a device of the abovementioned type that permits the accurate volumetric dosing of such materials over a wide range of volumes according to the type of applications mentioned above.

A further object of the present invention is to provide a device for handling materials in powder form in operations where particular conditions of safety and/or the absence of contact with sources of contamination need to be ensured, which device has a particularly simple structure which can be disassembled for maintenance and can be adapted to various applications involving the handling of materials in powder form, such as dosing, classification, mixing and similar operations.

These objects are achieved using the device for distributing set volumes of materials in powder form according to claim 1.

Characteristics and advantages of the device for distributing materials in powder form according to the present invention will appear more clearly from the following description of its embodiments, which are given here only as non-limitating examples with reference to the appended drawings in which:
Figure 1 is a diagrammatic perspective view of a first embodiment of the device according to the invention, with some parts removed and some parts not shown;
Figure 2 is a cross-section taken on a diametric plane passing through the axis of rotation of the closure members of the device shown in Figure 1;
Figure 3 is an exploded diagrammatic perspective view of a second embodiment of the device according to the invention; and
Figure 4 is a diagrammatic cross-section of the device shown in Figure 3, once assembled.

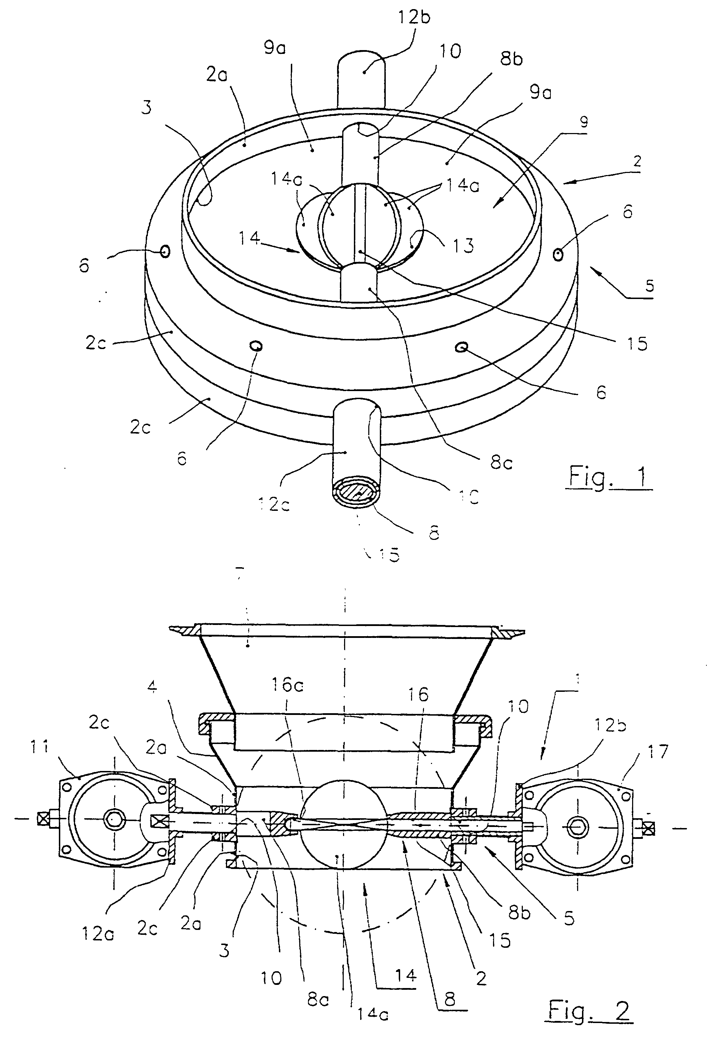

As shown in Figures 1 and 2, in one of its embodiments, the device according to the invention comprises a basically annular body 1 formed by a cylindrical section 2, the inside of which defines a passage 3, and a conical section 4, which is not shown in Figure 1 in order to keep the illustration clear. This conical section 4 is coaxial with the cylindrical section 2 and extends from the latter with a diverging shape. The cylindrical section 2 is in turn formed by the coaxial combination of two rings 2a. A flange 2c extends radially outwards from the rim of each of these rings 2a. The two rings 2a are joined together in such a way that the flanges 2c are adjacent and form a continuous circumferential rib 5. Threaded elements 6, extending between the flanges 2c, are provided for locking the two rings 2a together.

The body 1 can be supported on a frame (not shown), with the conical section 4 arranged towards the top, so that the passage 3 can intercept a flow of material in powder form that is fed by gravity from a reservoir mounted above it (not shown). The material is kept in motion e.g. by a hopper 7 with a conical shape, shown in Figure 2. This hopper 7 lies between the reservoir and the body 1, coaxially with the latter, and it partly enters the conical section 4.

Inside the body 1, there is a first shaft 8 that extends diametrically across the passage 3. This shaft 8 is supported rotatably by the cylindrical section 2 at the level of the circumferential rib 5. More specifically, the first shaft 8 engages rotatably within seats 10 made in the rib 5 on diametrically opposite sides, and extends beyond these, outside the body 1 and into corresponding flanged sleeves 12a and 12b, which are integral with the said body 1.

The first shaft 8 carries a first closure member 9 which closes off the passage 3 and is in the form of a plate with a shape basically corresponding to that of the passage 3, which is circular in the present case. The first closure member 9 is formed by two halves 9a, which extend from the opposite generatrices of the cylindrical sides of the first shaft 8. This first closure member 9 can rotate integrally with the first shaft 8 between a closed position, in which it is arranged at right angles to the axis of the body 1 and completely closes off the passage 3, and an open position, in which it is rotated through an angle of 90° with respect to the closed position, as indicated by a broken line in Figure 2, and in which it leaves the passage 3 virtually fully unobstructed.

There is a circular aperture 13 made centrally in the first closure member 9. This aperture 13 interrupts the continuity of the shape of the first shaft 8 and so it forms on the latter a section 8a on the flanged duct 12a side, and a section 8b on the flanged duct 12b side. A second shaft 15 engages rotatably in a seat 16 made coaxially in the first shaft 8 and it supports, integrally in the circular aperture 13, a second closure member 14, which will be described later. For a more detailed description, the seat 16 extends along the whole section 8b of the first shaft 8 and also comprises a portion 16a made in the section 8a, so that the second shaft 15 is rotatably supported at one end in the portion 16a and, beyond the aperture 13, is arranged in the remaining part of the seat 16 emerging from the free end of the flanged duct 12b.

The second closure member 14 is formed by several pairs of semicircular lobes 14a, which extend radially from the second shaft 15, so that they are coplanar in pairs, in order to form corresponding circular screens with a shape that basically corresponds to that of the aperture 13, these screens being therefore capable of completely and hermetically closing off the aperture to the material. In the example illustrated here there are six lobes 14a, which extend in an angularly equally spaced manner, so that a discontinuous rotation of the second closure member 14, caused by steps of angular displacement equal in amplitude to the angle between two adjacent lobes 14a, permits the successive closure of the aperture 13 by the screens formed by the pairs of lobes 14a.

The flanged sleeves 12a and 12b are fixed to means for actuating the first shaft 8 and the second shaft 15, respectively, which means can induce the rotation of the first closure member 9 between the closed position and the open position and vice versa, and the rotation of the second closure member 14 as described above, both these rotations being intermittent. In the example illustrated, the actuating means comprise pneumatic actuators 11 and 17, represented here only schematically because they are of the conventional type, in the active outlet end of which are engaged the corresponding ends of the first shaft 8 and of the second shaft 15, which for this purpose extend beyond the free ends of the flanged sleeve 12a and of that 12b, respectively. The actuating means also comprise remote-control means, which are preferably programmable so they can function automatically. These means are not shown or described in detail, since their characteristics are obvious to the expert in the field.

The device according to the present invention operates as follows. The flow of material in powder form is intercepted by the passage 3 of the body 1 and is stopped by the first closure member 9 in the closed position and by the second closure member 14, mounted with two coplanar lobes 14a in order to close off the aperture 13 (see Figure 1). The rotation of the first closure member 9 through an angle of 90°, induced by the actuator 11, until the open position is reached, indicated by a broken line in Figure 2, frees the passage 3 and permits the material to be discharged into a collecting container below, which is not shown. The first closure member 9 is kept in the open position for a certain length of time that depends on the amount of material to be discharged. It is obvious that, if the flow rate of the material through the passage 3 is constant and known, the said quantity is proportional to the time of opening, which can be regulated automatically by the control means according to the capacity of the container to be filled.

The return of the first closure member 9 to the closed position, effected by a 90° rotation of the first shaft 8, which can be either in the same sense as the previous one or in the opposite sense to it, causes the flow to stop. The dosing of the material in this way can only be rather approximate, for obvious reasons, and is therefore suitable only for dosing large volumes of material.

The second closure member 14 can be used if a more accurate dosing of the volume of material to be discharged into the container is needed. The rotation of the second closure member 14 by one step of displacement, induced by the actuator 19, permits the discharge of an amount of material that is proportionally small and is found in the volume swept out by a lobe 14a. The control means, adjusted on the basis of the construction parameters of the device (dimensions and number of lobes), will therefore control the execution of a certain number of steps, this number depending on the amount of material to be discharged, so as to approximate the total volume required as closely as possible.

The second closure member 14, whose steps of displacement can be brought about either by a continuous rotation or by an alternate rotation of the second shaft 15, therefore permits fine dosing of the material, with an accuracy that is entirely satisfactory in the type of application in question. Furthermore, this fine dosing could even be used independently of that effected by the first closure member 9, to dose small volumes of material.

In a variant embodiment, in which the second closure member 14 is also equipped with a single pair of lobes 14a, so that it takes on the form and function of the first closure member 9, the device can still carry out a more accurate dosing of the material than that possible with the first closure member 9. It is clear, moreover, that the number of lobes 14a must be increased if the accuracy of the dosing is to be raised. It should be mentioned in this respect that, when there are eight or more lobes 14a, the alternate action of the second shaft 15 makes two or more lobes located on the lower part of the body 1 inoperative and hence superfluous. In this case, the second closure member could therefore have an incomplete aspect. It is advantageous to equip the lobes 14a with cutting edges that can break up the lumps which are often formed as a result of moisture in the finely pulverized material.

The circular shape of the passage 3 and the aperture 13, and thus of the closure members facilitates the centring of the closure members, but other shapes can obviously also be adopted. Furthermore, although in the above example the first closure member 9 is like a plate, it can also be made of a lobed element shaped like the second closure member 14, and thus be fitted with a plurality of screens, each being capable of fully closing off the passage 3. In this case, the action of the first closure member is not between a closed position and an open position but - as described in the case of the second closure member 14 - between angularly spaced positions corresponding to the angle between two adjacent lobes, so as to discharge the amount of material involved in this displacement.

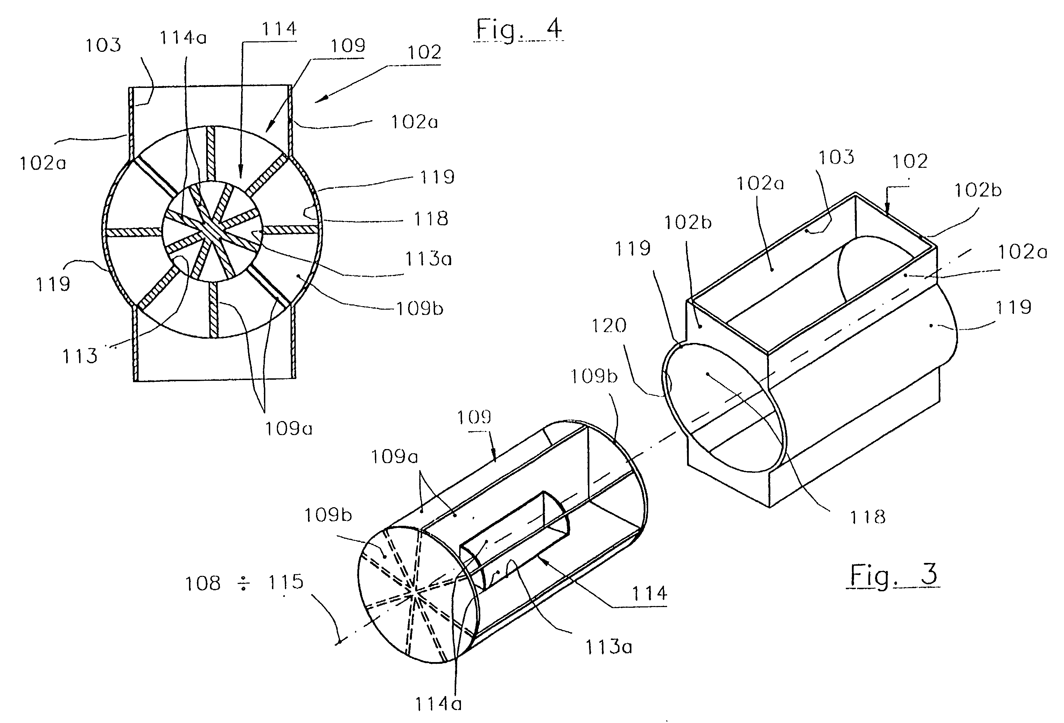

Both solutions described above have been adopted in a further embodiment of the device according to the invention, which is schematically illustrated in Figures 3 and -4, and which thus makes use of closure means that are both lobed and quadrilateral in plan view. The components that are substantially analogous to those in the first embodiment are not shown in Figures 3 and 4 and are not described in detail because their structure and operation can be deduced from the previous ones, where appropriate carrying out modifications that are obvious to an expert in the field on the basis of the above description.

With reference to Figures 3 and 4, the device has a box-like body, of which a basically parallelepipedal section 102 defining a passage 103 for the stream of material in powder form is shown. Two opposite vertical sides 102a of the parallelepipedal 102 present - centrally and symmetrically - corresponding protruding parts 119 with a curved shape. These parts can define, inside the section 102 itself, a seat 118 with a basically cylindrical shape to close off the passage 103 transversely.

Inside the seat 118, open on the other two vertical sides 102b of the section 102 through apertures 120 with a circular shape, made in them, there is a basically drum-shaped first closure member 109, which is mounted rotatably. In the example illustrated, the first closure member 109 comprises four pairs of quadrilateral lobes 109a, extending radially from a first shaft 108, so that they are coplanar in pairs, so as to form corresponding screens with a shape suitable for closing the seat 118 off completely by positioning themselves on a diametric plane of the seat. The lobes 109a extend between two end discs 109b which, positioning themselves so that they correspond to the apertures 120, thus close the passage 3 sideways.

Each pair of lobes 109a of the first closure member 109 has centrally an aperture 113a, which is also quadrilateral in the example illustrated and is made symmetrically with respect to the first shaft 108. The set of apertures 113a defines a seat 113 with a cylindrical shape, coaxial with the aperture 118, inside which a second closure member 114 engages rotatably. The latter has a drum shape fully corresponding to that of the first closure member 109, with lobes 114a extending from a second shaft 115 and capable of closing off the seat 113 in a way similar to that shown in the case of the lobes 109a in connection with the seat 118. Although it is not evident from the schematic diagram shown in Figure 3, if the second closure member 114 is to be placed inside the seat 113, the first closure member must obviously be formed by two longitudinally consecutive parts, which are to be coupled when the device is assembled.

The device according to this embodiment works by the intermittent action of both closure members 109 and 114, as mentioned above. It will be noted, moreover, that in this case, during the operation and hence during the rotation of the first closure member 109, the lobes adjacent to that pushing the material remain in contact with the internal sides of the protruding parts 119a and so always ensure the effective mechanical separation between the zone below the device (i.e. into which the material is discharged) and the zone above it. This permits the use of the device even when there is an appreciable pressure difference between the said zones which, with an embodiment such as the first described above, could cause undesirable effects, such as the agitation of the powder or the formation of streams in the opposite direction to the one required.

Although only one second closure member 14 is mentioned in the embodiments described and shown, it is possible to provide two or more second closure members, adjacent to and integral with corresponding shafts, capable of rotating independently. In this case, the first closure member 9 must obviously be fitted with a corresponding number of apertures 13. By using second closure members 14 that differ from one another in their characteristics (dimensions and/or number of lobes), this variant makes it possible to obtain even more dosing possibilities, owing to the different possible combinations of the action of the closure members.

As can be clearly seen from the above, the use of the device according to the invention for dosing purposes makes it possible fully to achieve the set objects. The device can in fact be controlled from a remote position and in a completely automatic manner. Therefore, it permits the material to be kept under conditions of effective sterility, because it does not involve any direct intervention by plant operatives on the material. Furthermore, even with a structure that has a simple construction and poses minimal maintenance problems, the device permits dosing operations that are completely suited to the application in question.

The advantages of the device should moreover be considered in connection with other possible uses thereof, in addition to its use as a dosing device, and which are not necessarily confined to the packaging of products for use in the pharmaceutical industry. In these applications, the device can be used either alone or in combination with other accessories, which will be obvious to the expert in the field. For example, if the device is combined with one or more screening elements with metal meshes, located at the outlet section, the device can function as a size classifier. Furthermore, if closure means which can close the device temporarily are located at the outlet section, and if the first and/or the second closure member are rotated continuously, the device can be used to mix two or more materials in powder form.

Other variations and/or modifications can be made to the device for distributing materials in powder form according to the present invention without thereby departing from the scope of protection defined in the appended claims.

## Claims

1. Device for distributing a set volume of a material in powder form, comprising a body (1) that defines a section acting as a passage (3) for the said material, first means (9) for closing the said passage (3) which are hinged to the said body, first actuating means (11) connected to the said first means of closure (9), and second means (14) for closing a portion (13) of the said passage section which are hinged to the said body (1) and engage in a leaktight manner in at least one aperture (13) made in the said first means of closure (9), engaging with the latter in order to close off the said passage (3) completely, corresponding second actuating means (17), independent of those of the said first means of closure (9), being connected to the said second means of closure (14) **characterized in that** the said first means of closure are integral with a first shaft (8) that is rotatably connected to the said body (1), extends diametrically across the said passage (3) and is connected to said first actuating means (11), and the said second means of closure are integral with corresponding shafts rotatably engaged inside the said first shaft (8) and connected to said second actuating means (17).

2. Device according to claim 1, in which the said first means of closure comprise a first closure member comprising at least one pair of lobes which extend radially from the said first shaft in an angularly equally spaced manner, the said lobes being coplanar in pairs, in order to form a corresponding screen for the complete closure of the said passage of the said body.

3. Device according to Claim 2, in which the said first closure member comprises a pair of the said lobes, so that it is able to rotate between a closed position, in which it completely closes off the said passage, and an open position, rotated through an angle of 90° with respect to the closed position, in which it allows the said material in powder form to be discharged through the said passage.

4. Device according to Claim 2, in which the said first closure member comprises at least two pairs of the said lobes, so that a discontinuous rotation of the said first closure member, caused by steps of angular displacement equal in amplitude to the angle between two adjacent lobes, can cause the discharge, through the said passage, of the amount of the said material in powder form inside the volume swept out by one of the said lobes.

5. Device according to one of the previous claims, in which the said second means of closure comprise at least one second closure member, comprising at least one pair of lobes which extend radially from a corresponding second shaft in an angularly equally spaced manner, the said lobes being coplanar in pairs, in order to form a corresponding screen for the complete closure of the corresponding aperture made in the said first closure member.

6. Device according to Claim 5, in which the said second closure member comprises a pair of the said lobes, so that it is able to rotate between a position in which it completely closes off the said aperture made in the said first closure member, and a position rotated through an angle of 90° with respect to the closed position, in which it allows the said material in powder form to be discharged through the said aperture.

7. Device according to Claim 5, in which the said second closure member comprises at least two pairs of the said lobes, so that a discontinuous rotation of the said second closure member, caused by steps of angular displacement equal in amplitude to the angle between two adjacent lobes, can cause the discharge, through the said aperture, of the amount of the said material in powder form inside the volume swept out by one of the said lobes.

8. Device according to one of the previous claims, comprising a second closure member, arranged centrally with respect to the said first closure member.

9. Device according to one of the previous claims 5 to 7, in which the said lobes of the said second closure member, and the corresponding apertures in the said first closure member, have a curved shape.

10. Device according to one of the previous claims, in which the said shafts extend outside the said body to engage with the corresponding actuating means.

11. Device according to the previous claims, in which the said body is basically annular in shape and comprises a substantially cylindrical section that defines the said passage, the said first and second shafts being arranged along a diameter of the said cylindrical section.

12. Device according to one of the preceding claims 2 to 4 to 11, in which the said body is box-shaped and comprises a basically parallelepipedal section that defines the said passage, and a seat of basically cylindrical shape to close off the passage transversely, the said first and second shafts being arranged coaxially with the said cylindrical seat, and the said lobes of the said first means of closure having a quadrilateral shape so that, by positioning themselves on a diametric plane of the said seat, they can close off the said passage completely.

13. Device according to Claim 12, in which the said cylindrical seat is defined by two protruding parts with a curved shape, formed centrally and symmetrically by two opposite vertical sides of the said parallelepipedal section of the said body.

## Patentansprüche

1. Vorrichtung zum Verteilen einer Folge von Mengen von Material in Pulverform, mit einem Gehäuse (1), das einen Bereich bestimmt, der als ein Durchlass (3) für das Material wirkt, ersten Einrichtungen (9) zum Verschließen des Durchlasses (3), die am Gehäuse drehbar angelenkt sind, ersten Betätigungseinrichtungen (11), die an die ersten Verschlusseinrichtungen (9) angeschlossen sind, und zweiten Einrichtungen (14) zum Verschließen eines Abschnittes (13) des Durchlassbereiches, die am Gehäuse (1) drehbar angelenkt sind und die in einer leckagedichten Weise in mindestens eine Öffnung (13) eingreifen, die in den ersten Verschlusseinrichtungen (9) ausgebildet ist, und mit der letzteren verrastbar ist, um den Durchlass (3) vollständig zu verschließen, wobei korrespondierende zweite Betätigungseinrichtungen (17) unabhängig von denen der ersten Verschlusseinrichtung (9) an die zweiten Verschlusseinrichtungen (14) angeschlossen sind,
**dadurch gekennzeichnet,**
**dass** die ersten Verschlusseinrichtungen mit einer ersten Welle (8) integral ausgebildet sind, die drehbar am Gehäuse (1) angeschlossen ist, die sich diametral über dem Durchlass (3) erstreckt, und die an die erste Betätigungseinrichtung (11) angeschlossen ist, und dass die zweiten Verschlusseinrichtungen integral mit korrespondierenden Wellen drehbar in die erste Welle (8) eingreifen und an die zweite Betätigungseinrichtung (17) angeschlossen sind.

2. Vorrichtung nach Anspruch 1, wobei die ersten Verschlusseinrichtungen ein erstes Verschlusselement aufweisen, das mindestens ein Paar Lappen aufweist, die sich von der ersten Welle radial gleichwinkelig wegerstrecken, wobei die Lappen paarweise koplanar sind, um einen entsprechenden Schirm zum vollständigen Verschließen des Durchlasses des Gehäuses zu bilden.

3. Vorrichtung nach Anspruch 2, wobei das erste Verschlusselement ein Paar Lappen aufweist, so dass es zwischen einer verschlossenen Position, in der es den Durchlass vollständig verschließt, und einer offenen Position um einen Winkel von 90 Grad in Bezug auf die verschlossene Position drehbar ist, in der es das Pulvermaterial durch den Durchlass entlädt.

4. Vorrichtung nach Anspruch 2, wobei das erste Verschlusselement mindestens zwei Paare Lappen aufweist, so dass eine diskontinuierliche Drehung des ersten Verschlusselementes, die durch schrittweise Winkelverstellung entsprechend der Winkelamplitude zwischen zwei benachbarten Lappen verursacht wird, durch den Durchlass eine Pulvermaterialentladung des Betrages im Inneren der Pulvermaterialmenge verursachen kann, die durch einen Lappen ausgeschüttet wird.

5. Vorrichtung nach einem der vorhergehenden Ansprüche, wobei die zweiten Verschlusseinrichtungen mindestens ein zweites Verschlusselement aufweisen, das mindestens ein Paar Lappen aufweist, die sich von einer zugehörigen zweiten Welle gleichwinkelig voneinander beabstandet radial wegerstrecken, wobei die Lappen paarweise koplanar sind, um einen Schirm zum vollständigen Verschließen der entsprechenden, im ersten Verschlusselement ausgebildeten Öffnung zu bilden.

6. Vorrichtung nach Anspruch 5, wobei das zweite Verschlusselement ein Paar Lappen aufweist, so dass es zwischen einer Position, in der es die im ersten Verschlusselement ausgebildete Öffnung vollständig verschließt, und einer in Bezug auf die verschlossene Position um 90 Grad gedrehten Position verdrehbar ist, in der es eine Entladung des Pulvermaterials durch die Öffnung erlaubt.

7. Vorrichtung nach Anspruch 5, wobei das zweite Verschlusselement mindestens ein Paar Lappen aufweist, so dass eine diskontinuierliche Drehung des zweiten Verschlusselementes, die durch eine schrittweise Winkelverstellung entsprechend der Winkelamplitude zwischen zwei benachbarten Lappen verursacht wird, durch die Öffnung eine Pulvermaterialentladung des Betrages im Inneren der Pulvermaterialmenge verursachen kann, die durch einen Lappen ausgeschüttet wird.

8. Vorrichtung nach einem der vorhergehenden Ansprüche, mit einem zweiten Verschlusselement, das in Bezug auf das erste Verschlusselement zentral angeordnet ist.

9. Vorrichtung nach einem der Ansprüche 5 bis 7, wobei die Lappen des zweiten Verschlusselementes und die entsprechenden Öffnungen im ersten Verschlusselement eine gekrümmte Gestalt besitzen.

10. Vorrichtung nach einem der vorhergehenden Ansprüche, wobei sich die Wellen aus dem Gehäuse heraus erstrecken und mit den zugehörigen Betätigungseinrichtungen verbunden sind.

11. Vorrichtung nach einem der vorhergehenden Ansprüche, wobei das Gehäuse in seiner Gestalt grundsätzlich ringförmig ist und im wesentlichen einen zylindrischen Bereich aufweist, der den Durchlass bestimmt, und die erste und die zweite Welle entlang eines Durchmessers des zylindrischen Bereiches angeordnet sind.

12. Vorrichtung nach einem der Ansprüche 2 bis 4, wobei das Gehäuse schachtelförmig ist und einen grundsätzlich parallelepipedförmigen7 Bereich, der einen Durchlass bestimmt, und ein Lager von grundsätzlich zylindrischer Gestalt aufweist, um den Durchlass in Querrichtung zu verschließen, wobei die erste und die zweite Welle im zylindrischen Lager koaxial angeordnet sind, und die Lappen der ersten Verschlusseinrichtungen eine viereckige Gestalt besitzen, so dass sie den Durchlass vollständig verschließen können, wenn sie in einer Diametralebene des Lagers positioniert sind.

13. Vorrichtung nach Anspruch 12, wobei das zylindrische Lager durch zwei vorstehende Teile mit einer gekrümmten Gestalt bestimmt ist, die zentral und symmetrisch durch zwei sich gegenüberliegende vertikale Seiten des parallelepipedförmigen Bereiches des Gehäuses gebildet sind.

## Revendications

1. Dispositif pour distribuer un volume prédéterminé d'un matériau poudreux, comprenant un corps (1) qui détermine une section agissant comme un passage (3) pour le dit matériau, des premiers moyens (9) pour fermer le dit passage (3) qui sont articulés au dit corps, des premiers moyens d'actionnement (11) reliés aux dits premiers moyens de fermeture (9), et des seconds moyens (14) pour fermer une partie (13) de la dite section de passage qui sont articulés au dit corps (1) et s'engagent de façon étanche dans au moins une ouverture (13) ménagée dans les dits premiers moyens de fermeture (9), l'engagement dans ces derniers assurant la fermeture complète du dit passage (3), des seconds moyens d'actionnement (17) correspondants, indépendants de ceux des dits premiers moyens de fermeture (9), étant reliés aux dits seconds moyens de fermeture (14), **caractérisé en ce que** les dits premiers moyens de fermeture sont d'une seule pièce avec un arbre (8) qui est relié pour tourner au dit corps (1), s'étend de façon diamétrale en travers du dit passage (3) et est relié aux dits premiers moyens d'actionnement (11), et les dits seconds moyens de fermeture sont d'une seule pièce avec des arbres correspondants qui sont engagés pour tourner à l'intérieur du dit premier arbre (8) et sont reliés aux dits seconds moyens d'actionnement (17).

2. Dispositif selon la revendication 1, dans lequel les dits moyens de fermeture comprennent un premier élément de fermeture comportant au moins une paire de lobes qui s'étendent radialement à partir du dit premier arbre en étant écartés angulairement de façon égale, les dits lobes étant par paires dans un même plan, afin de former un écran correspondant pour la fermeture complète du dit passage du dit corps.

3. Dispositif selon la revendication 2, dans lequel le dit premier élément de fermeture comprend une paire des dits lobes, de sorte qu'il est capable de tourner entre une position fermée, dans laquelle il ferme complètement le dit passage, et une position ouverte, correspondant à une rotation d'un angle de 90° par rapport à la position fermée, dans laquelle il permet le déchargement, à travers le dit passage, du dit matériau poudreux.

4. Dispositif selon la revendication 2, dans lequel le dit premier élément comprend au moins deux paires de dits lobes, de façon qu'une rotation discontinue du dit premier élément de fermeture, provoquée par des étapes de déplacement angulaire d'une amplitude égale à l'angle formé entre deux lobes adjacents, puisse provoquer le déchargement, à travers le dit passage, de la quantité du dit matériau poudreux à l'intérieur du volume balayé par l'un des dits lobes.

5. Dispositif selon l'une des revendications précédentes, dans lequel les dits seconds moyens de fermetures comprennent au moins un second élément de fermetures, comprenant au moins une paire de lobes qui s'étendent radialement à partir d'un second arbre correspondant en étant écartés angulairement de façon égale, les dits lobes étant par paires dans un même plan, afin de former un écran correspondant pour la fermeture complète de l'ouverture correspondante ménagée dans le dit premier élément de fermeture.

6. Dispositif selon la revendication 5, dans lequel le dit second élément de fermeture comprend une paire de dits lobes, de façon à pouvoir tourner entre une position dans laquelle il ferme complètement la dite ouverture ménagée dans le dit premier élément de fermeture, et une position obtenue par une rotation d'un angle de 90° par rapport à la position fermée, dans laquelle il permet le déchargement, à travers la dite ouverture, du dit matériau poudreux.

7. Dispositif selon la revendications 5, dans lequel le dit second élément de fermeture comprend au moins deux paires de dits lobes, de façon qu'une rotation discontinue du dit second élément de fermeture, provoquée par des étapes de déplacement angulaire d'une amplitude égale à l'angle formé par deux lobes adjacents, puisse provoquer le déchargement, à travers la dite ouverture, de la quantité du dit matériau poudreux à l'intérieur du volume balayé par l'un des deux lobes.

8. Dispositif selon l'une des revendications précédentes, comprenant un second élément de fermeture disposé centralement par rapport au dit premier élément de fermeture.

9. Dispositif selon l'une des revendications précédentes 5 à 7, dans lequel les dit lobes du dit second élément de fermeture, et les ouvertures correspondantes ménagées dans le dit premier élément de fermeture, ont une forme incurvée.

10. Dispositif selon l'une des revendications précédentes, dans lequel les dits arbres s'étendent à l'extérieur du dit corps pour engager les moyens d'actionnement correspondants.

11. Dispositif selon l'une des revendications précédentes, dans lequel le dit corps est fondamentalement de forme annulaire et comprend une section substantiellement cylindrique qui détermine le dit passage, les dits premier et second arbres étant disposés le long d'un diamètre de la dite section cylindrique.

12. Dispositif selon l'une des revendications précédentes 2 à 4, dans lequel le dit corps est en forme de caisson et comprend une section fondamentalement parallélépipédique qui détermine le dit passage, et un siège de forme fondamentalement cylindrique pour fermer transversalement le passage, les dits premier et second arbres étant disposés coaxialement au dit siège cylindrique, et les dits lobes des dits premiers moyens de fermeture ayant une forme de quadrilatère de sorte que, en les positionnant sur un plan diamétral du dit siège, ils peuvent complètement fermer le dit passage.

13. Dispositif selon la revendications 12, dans lequel le dit siège cylindrique est déterminé par deux parties en saillie à forme incurvée, formées centralement et symétriquement par deux côtés verticaux opposés de la dite section parallélépipédique du dit corps.
